# EUROPÄISCHE PATENTSCHRIFT

(11) **EP 1 497 094 B1**
(45) Veröffentlichungstag und Bekanntmachung des Hinweises auf die Patenterteilung: **17.12.2008**
(21) Anmeldenummer: 03727196.2
(22) Anmeldetag: 10.04.2003
(51) Int. Cl.: B29C 45/00, B29C 49/06, B29C 49/64

(54) **VERFAHREN UND VORRICHTUNG ZUR BEARBEITUNG VON VORFORMLINGEN**
METHOD AND DEVICE FOR PROCESSING PREFORMS
PROCEDE ET DISPOSITIF POUR FACONNER DES PREFORMES

(30) Priorität: 10.04.2002 DE 10215722
(43) Veröffentlichungstag der Anmeldung: 19.01.2005
(60) Teilanmeldung: 07014410.0
(73) Patentinhaber: Husky Injection Molding Systems Ltd., Bolton Ontario L7E 5S5 (CA)
(72) Erfinder: PESAVENTO, Modesto M., 98574 Schmalkalden (DE)
(74) Vertreter: Vossius, Volker
(86) Internationale Anmeldenummer: PCT/DE2003/001202
(87) Internationale Veröffentlichungsnummer: WO 2003/086728

(56) Entgegenhaltungen:
- EP-A- 0 763 415
- US-A- 4 690 633
- US-B1- 6 332 770
- PATENT ABSTRACTS OF JAPAN vol. 005, no. 190 (M-100), 4. Dezember 1981 (1981-12-04) & JP 56 113433 A (INOUE MTP CO LTD), 7. September 1981 (1981-09-07)
- PATENT ABSTRACTS OF JAPAN vol. 1996, no. 02, 29. Februar 1996 (1996-02-29) & JP 07 276485 A (UBE IND LTD), 24. Oktober 1995 (1995-10-24)

## Beschreibung

Die Erfindung betrifft ein Verfahren zur Bearbeitung von Vorformlingen aus einem thermoplastischen Kunststoff, die zur Blasverformung in Behälter vorgesehen sind und bei dem die Vorformlinge in einem Spritzgußwerkzeug spritzgußtechnisch hergestellt sind und nach einer Entnahme aus dem Spritzgußwerkzeug verformt werden.

Die Erfindung betrifft darüber hinaus eine Vorrichtung zur Bearbeitung von Vorformlingen aus einem thermoplastischen Kunststoff, die zur Blasverformung in Behälter vorgesehen und in einem Spritzgußwerkzeug spritzgußtechnisch hergestellt sind, bei der die Vorformlinge mindestens von einer Kühleinrichtung beaufschlagt sind.

Ein Verfahren zur Bearbeitung von Vorformlingen aus einem thermoplastischen Kunststoff wird beispielsweise in der PCT-WO 97/39874 beschrieben. Die Vorformlinge werden hier nach einer Entnahme aus dem Spritzgußwerkzeug in Kühlhülsen überführt und durch Beaufschlagung mit einem Innendruck gegen die Wände der Kühlhülse gedrückt. Hierdurch wird während des gesamten Kühlvorganges ein Kontakt der Vorformlinge mit der Wandung der Kühlhülse aufrechterhalten, da durch den einwirkenden Innendruck ein Schrumpfen der Vorformlinge aufgrund der Abkühlung kompensiert werden kann.

Eine blastechnische Verformung von Vorformlingen in Behälter innerhalb einer Blasform wird in der DE 41 28 438 A1 erläutert. Die Blasform ist hier mit porösen Pfropfen versehen, die an eine Druckquelle angeschlossen sind. Durch die Druckluftbeaufschlagung der porösen Pfropfen wird ein Druckluftkissen bereitgestellt, das Oberflächenbeschädigungen der geblasenen Behälter durch ein Gleiten des Materials auf der inneren Oberfläche der Blasform verhindert.

Eine bekannte Vorrichtung und ein bekanntes Verfahren zum Entformen von Vorformlingen wird in der US-PS 4,690,633 beschrieben. Dort wird insbesondere auf eine herkömmliche Praxis Bezug genommen, bei der ein Druckunterschied zwischen dem Inneren des Vorformlings und dem Raum zwischen der Außenseite davon und einer Führungshülse erzeugt wird, indem das Innere der Führungshülse mit einem Überdruck oder einem Unterdruck beaufschlagt wird. Obgleich die Mittel, um dies zu bewerkstelligen, nicht in der US-PS 4,690,633 beschrieben werden, ist es der Anmelderin bekannt, dass die Führungshülse am Boden der Kavität in der Führungshülse einen einzelnen Luftabsaugauslass und die Verwendung eines Blasstopfens enthalten hat.

Aufgabe der vorliegenden Erfindung ist es, ein Verfahren der einleitend genannten Art derart zu verbessern, daß eine Herstellung von Vorformlingen mit geringerem Zeitbedarf und bei einfachem konstruktiven Aufbau unterstützt wird.

Diese Aufgabe wird erfindungsgemäß dadurch gelöst, daß die Vorformlinge durch Unterdruckeinwirkung verformt werden.

Weitere Aufgabe der vorliegenden Erfindung ist es, eine Vorrichtung der einleitend genannten Art derart zu konstruieren, daß eine Bearbeitung der Vorformlinge bei einfachem gerätetechnischen Aufbau sowie mit einem geringen Herstellungspreis der Vorrichtung unterstützt wird.

Diese Aufgabe wird erfindungsgemäß dadurch gelöst, daß die Kühleinrichtung mindestens bereichsweise aus einem porösen Material ausgebildet ist.

Die Verformung der Vorformlinge durch Unterdruckeinwirkung im Anschluß an die spritzgußtechnische Herstellung der Vorformlinge führt zu einer Reihe von Vorteilen. Ein Vorteil besteht darin, daß der Vorformling durch eine äußere Unterdruckeinwirkung gegen Wandungen einer Kühlhülse gezogen werden kann und daß hierdurch während des gesamten Kühlvorganges ein unmittelbarer Kontakt zwischen dem Vorformling und der Wandung der Kühlhülse aufrechterhalten bleibt.

Ein weiterer Vorteil ist darin zu sehen, daß durch die Unterdruckeinwirkung eine Verformung des Vorformlings in Längsrichtung, in einer radialen Richtung und / oder in einer Umfangsrichtung bezüglich einer Vorformlingslängsachse erfolgen kann, so daß der Vorformling mit einer von der Kontur der Kavitäten des Spritzgußwerkzeuges abweichenden Gestaltung versehen werden kann. Insbesondere ist hierbei daran gedacht, durch die Unterdruckeinwirkung eine Materialverteilung in der Wandung des Vorformlings zu erzeugen, die für eine nachfolgende blastechnische Herstellung von ovalen Flaschen günstig ist. In Umfangsrichtung des Vorformlings können hierdurch unterschiedliche Wanddicken bereitgestellt werden.

Ein weiterer Vorteil besteht darin, daß durch die Unterdruckeinwirkung ungewollt verformte oder vom Spritzgußwerkzeug nicht im vollen Umfang ausgeformte Vorformlinge nachgeformt werden können. Hierdurch ist es zum einen möglich, krumme Vorformlinge auszurichten oder Vorformlingsdeformationen zu kompensieren. Insbesondere ist auch daran gedacht, bei einem Einsatz des erfindungsgemäßen Verfahrens und / oder der erfindungsgemäßen Vorrichtung bewußt im Bereich des Spritzgußwerkzeuges die Zykluszeiten zu verkürzen oder vergrößerte Toleranzen bei den Werkzeuggeometrien des Spritzgußwerkzeuges vorzugeben. Bei einer derartigen bewußt zu frühen Entformung der Vorformlinge wird ein Verziehen der zu heiß entformten Vorformlinge oder eine Ausbildung von Einfallstellen in Kauf genommen, da diese Fehler der Vorformlinge durch die Nachverformung und aufgrund der Unterdruckeinwirkung kompensiert werden können. Die sehr teuren Spritzgußwerkzeuge können hierdurch mit einer vergrößerten Produktivität genutzt werden.

Ein typischer Verformungsvorgang erfolgt derart, daß der Unterdruck außenseitig auf die Vorformlinge einwirkt.

Eine bevorzugte Anwendung besteht darin, daß die Vorformlinge innerhalb einer Kühleinrichtung vom Unterdruck beaufschlagt werden.

Eine preiswerte Unterdruckzuführung kann dadurch erfolgen, daß die Vorformlinge durch ein poröses Material hindurch vom Unterdruck beaufschlagt werden.

Zur Unterstützung einer gleichmäßigen Verteilung des Unterdruckes wird vorgeschlagen, daß der Unterdruck dem porösen Material durch Unterdruckkanäle hindurch zugeführt wird.

Eine Handhabung der Vorformlinge kann dadurch unterstützt werden, daß die Vorformlinge lokal mit einem Druckmittel beaufschlagt werden.

Eine zusätzliche Beeinflussung des Prozeßablaufes kann dadurch erfolgen, daß die Vorformlinge temporär mit einem Druckmittel beaufschlagt werden.

Verbesserte Steuerungsmöglichkeiten werden dadurch bereitgestellt, daß eine Unterdruckbeaufschlagung der Vorformlinge durch lokale poröse Einsätze hindurch erfolgt.

Eine Vorgabe lokal unterschiedlicher Druckbedingungen entlang einer Innenbegrenzung der den Vorformling aufnehmenden Kavität kann dadurch erreicht werden, daß lokale poröse Einsätze über Steuerventile teilweise vorgebbar an eine Druckquelle sowie an eine Unterdruckquelle angeschlossen werden.

Eine typische Anwendung besteht darin, daß die Verformung des Vorformlings als Zwischenschritt bei der Durchführung eines einstufigen Spritz-Blas-Verfahrens durchgeführt wird.

Ebenfalls ist daran gedacht, daß die Verformung des Vorformlings als Zwischenschritt bei der Durchführung eines zweistufigen Spritz-Blas-Verfahrens durchgeführt wird.

Eine vorteilhafte gerätetechnische Realisierung kann dadurch erfolgen, daß das poröse Material im Bereich einer Kühlhülse angeordnet ist.

Zur Bereitstellung einer ausreichenden mechanischen Stabilität wird vorgeschlagen, daß das poröse Material als ein Einsatz ausgebildet ist, der von einem Rahmen gehaltert ist.

Eine Unterdruckbereitstellung innerhalb des porösen Materials mit geringen Strömungswiderständen wird dadurch erreicht, daß im Bereich des Einsatzes mindestens ein Unterdruckkanal angeordnet ist.

Gemäß einer weiteren Konstruktionsvariante ist daran gedacht, daß im Bereich des Rahmens mindestens ein Kühlkanal angeordnet ist.

Eine Druckabschirmung gegenüber einer Umgebung kann dadurch erreicht werden, daß der Einsatz mindestens bereichsweise von einer Dichtung bedeckt ist.

Zur Ermöglichung einer druckunterstützten Beweglichkeit des Vorformlings relativ zum Einsatz aus dem porösen Material wird vorgeschlagen, daß sich der Unterdruckkanal bis in den Bereich einer Kavität des Einsatzes erstreckt.

Eine typische Werkstoffauswahl besteht darin, daß das poröse Material als ein poröses Metall ausgebildet ist.

Eine besonders gute Wärmeleitfähigkeit kann dadurch erreicht werden, daß das poröse Metall aus Aluminium ausgebildet ist.

Eine andere Ausführungsvariante besteht darin, daß das poröse Material als ein Sintermetall ausgebildet ist. Diese Materialien können mit variablen Porengrößen, schon ab wenigen µm aufwärts, eingesetzt werden. Je geringer die Porengröße gewählt wird, um so besser ist die Oberflächengüte des Vorformlings. Eine zu geringe Porengröße führt zu einem zu hohen Druck-/Vakuumbedarf. Ferner neigen zu kleine Poren zum Verstopfen durch Staub.
Folgende porösen (luftdurchlässige) Werkstoffe sind beispielsweise handelsüblich verfügbar:
"METAPOR®" PORTEC AG;
"ultraporex®" ultarfilter international AG;
"PorceraxII®" International Mold Steel, INC.;
"KuporeX™" KUBOTA Corporation;

In den Zeichnungen sind Ausführungsbeispiele der Erfindung schematisch dargestellt. Es zeigen:
- Fig. 1: Einen Querschnitt durch eine Kühleinrichtung, bei der von einem porösen Element eine Kühlhülse ausgebildet ist,
- Fig. 2: eine gegenüber Fig. 1 modifizierte Ausführungsform, bei der durch das poröse Element sowohl Unterdruck als auch Überdruck in Richtung auf den Vorformling leitbar ist,
- Fig. 3: einen Querschnitt durch eine Ausführungsform, bei der eine Mehrzahl von räumlich voneinander getrennten porösen Einsätzen verwendet sind, die steuerbar an Überdruck und / oder Unterdruck anschließbar sind,
- Fig. 4.: eine teilweise Darstellung eines Vertikalschnittes durch eine Einrichtung, bei der ein Innendorn für die Vorformlinge aus einem porösen Material für eine in Richtung der Längsachse der Vorformlinge teilweise Nachverformung verwendet wird die jedoch nicht Teil der Erfindung ist,
- Fig. 5: eine gegenüber Fig. 4 abgewandelte Ausführungsform, bei der der Innendorn für eine vollständige Nachverformung des Vorformlings ausgebildet ist die jedoch nicht Teil der Erfindung ist,,
- Fig. 6: eine gegenüber Fig. 5 abgewandelte Ausführungsform, bei der Verformungskräfte auf den Vorformling durch am Innendorn angebrachte Membrane aufgebracht werden die jedoch nicht Teil der Erfindung ist,
- Fig. 7: einen Querschnitt durch einen in einem Einsatz aus porösem Material angeordneten Vorformling,
- Fig. 8: eine Querschnittdarstellung entsprechend Fig. 7 nach einer Verformung des Vorformlings durch Unterdruckeinwirkung und
- Fig. 9: eine schematische Querschnittdarstellung eines verformten Vorformlings gemäß Fig. 8 sowie einer korrespondierenden ovalen Behälterkontur nach einer Blasverformung des Vorformlings.

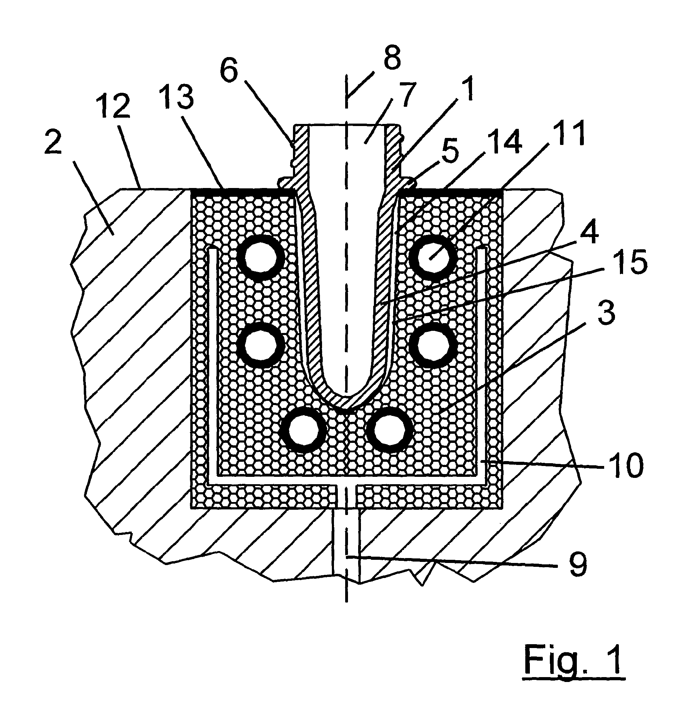

Fig. 1 zeigt einen Querschnitt durch eine Vorrichtung zur Bearbeitung von Vorformlingen (1), die einen Rahmen (2) sowie einen Einsatz (3) aus einem porösen Material aufweist. Der Begriff des porösen Materials umfaßt hierbei sowohl offenporige schaumartige Strukturen als auch Sintermaterialien oder vergleichbare Materialstrukturen. Aufgrund der hohen Wärmeleitfähigkeit haben sich insbesondere offenporige Metallschäume, beispielsweise aus Aluminium, bewährt.

Der Vorformling (1) besteht aus einem thermoplastischen Material, beispielsweise aus PET (Polyethylenterephthalat) und ist mit einer Seitenwand (4), einem Stützring (5) sowie einem Mündungsabschnitt (6) versehen. Ein Innenraum (7) des Vorformlings (1) erstreckt sich entlang einer Vorformlingslängsachse (8).

Durch den Rahmen (2) hindurch erstreckt sich ein Unterdruckkanal (9), der mit einem Unterdruckkanal (10) innerhalb des Einsatzes (3) verbunden ist. Im Bereich des Einsatzes (3) sind darüber hinaus Kühlkanäle (11) angeordnet, durch die ein Kühlmedium zirkulieren kann. Im Bereich einer Oberfläche (12) des Rahmens (2) ist eine Oberfläche des Einsatzes (3) von einer Dichtung (13) verschlossen, um bei einer Unterdruckbeaufschlagung ein Ansaugen von Umgebungsluft zu verhindern.

Der Vorformling (1) ist in eine Kavität (14) des Einsatzes (3) derart eingeführt, daß der Stützring (5) im Bereich der Oberfläche des Einsatzes (3) aufliegt. Bei einer Unterdruckbeaufschlagung des Einsatzes (3) wird zwischen dem Vorformling (1) und der Kavität (14) befindliche Luft abgesaugt und der im Bereich des Innenraumes (7) des Vorformlings (1) anstehende Umgebungsdruck drückt die Seitenwand (4) des Vorformlings (1) gegen eine Begrenzungsfläche (15) der Kavität (14). Der hierdurch hervorgerufene Materialkontakt führt zu einer verbesserten Kühlung des Vorformlings (1) und trägt dazu bei, daß der Vorformling (1) die Form der Begrenzungsfläche (15) annimmt.

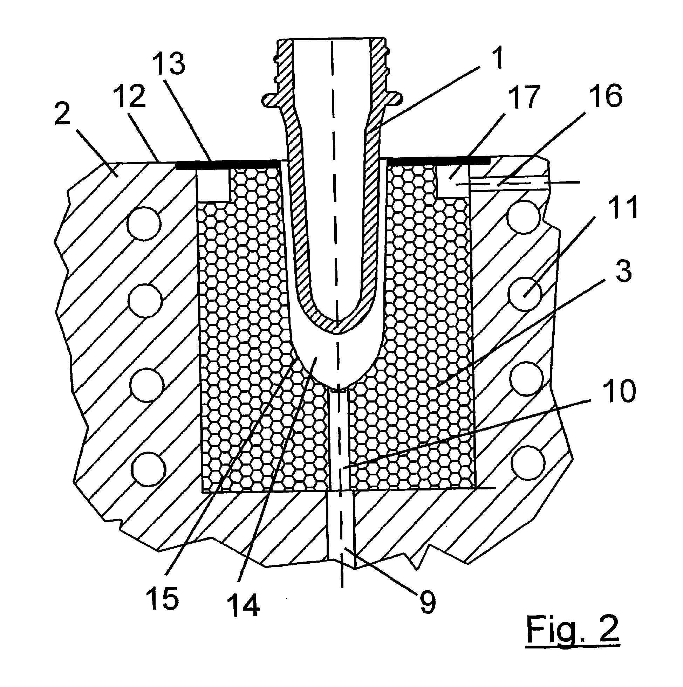

Bei der Ausführungsform gemäß der Fig. 2 streckt sich der Unterdruckkanal (10) bis zur Kavität (14) des Einsatzes (3). Darüber hinaus sind die Kühlkanäle (11) im Bereich des Rahmens (2) angeordnet. Zusätzlich zum Unterdruckkanal (9) ist im Bereich des Rahmens (2) ein Druckmittelkanal (16) angeordnet, der in einen Druckmittelanschluß (17) des Einsatzes (3) einmündet. Vorzugsweise erfolgt die Druckmitteleinleitung mit einem geringen Abstand zur Dichtung (13). Hierdurch wird durch die Kavität (14) hindurch eine Luftströmung in Richtung auf den Unterdruckkanal (9) erzeugt, die ein Einführen der Vorformlinge (1) in die Kavität (14) erleichtert und Kratzer am Vorformling (1) durch einen Kontakt mit der Begrenzungsfläche (15) vermeidet. Darüber hinaus wird ein ungleichmäßiger Kontakt des Vorformlings (1) mit dem Einsatz (3) vermieden, der zu ungleichmäßigen Abkühlungen des Vorformlings (1) führen würde.

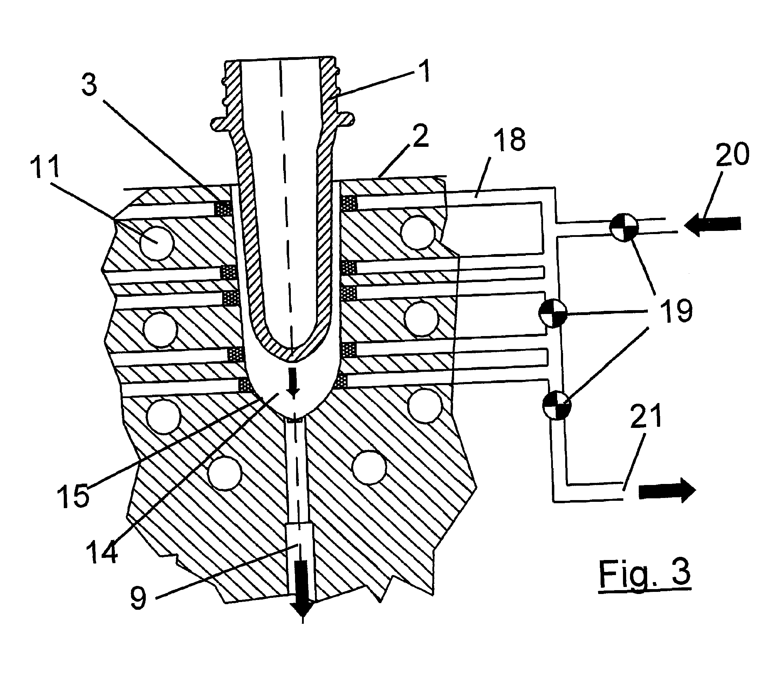

Bei der Ausführungsform gemäß Fig. 3 ist die Kavität (14) im Bereich des Rahmens (2) ausgebildet und im Bereich der Begrenzungsfläche (15) der Kavität (14) sind eine Mehrzahl von porösen Einsätzen (3) angeordnet. Die porösen Einsätze (3) sind hier räumlich voneinander getrennt. Darüber hinaus sind die Einsätze (3) jeweils mit Versorgungskanälen (18) verbunden, die über Steuerventile (19) vorgebbar an eine Druckquelle (20) oder an eine Unterdruckquelle (21) anschließbar sind. Auch bei dieser Ausführungsform erstreckt sich der Unterdruckkanal (9) bis in den Bereich der Kavität (14). Um das Einführen des Vorformlings (1) in die Kavität (14) zu erleichtern, wird zuerst nur Unterdruckkanal (9) mit einem Vakuum beaufschlagt. Sobald sich der Vorformling (1) komplett in der Kavität (14) befindet, gibt die Unterdruckquelle (21) ein höheren Unterdruck frei, um den Vorformling (1) an die Begrenzungsfläche (15) zu pressen.

Die räumlich voneinander getrennten Einsätze (3) stellen düsenartige Anordnungen bereit, die lokale Verformungen des Vorformlings (1) hervorrufen oder Druckluftkissen für den Vorformlinge (1) erzeugen können. Insbesondere ist auch daran gedacht, über die Einsätze (3) steuerbar heiße Druckluft zuzuführen, um den Vorformling (1) lokal zur Unterstützung einer vorgegebenen Verformung zu erwärmen.

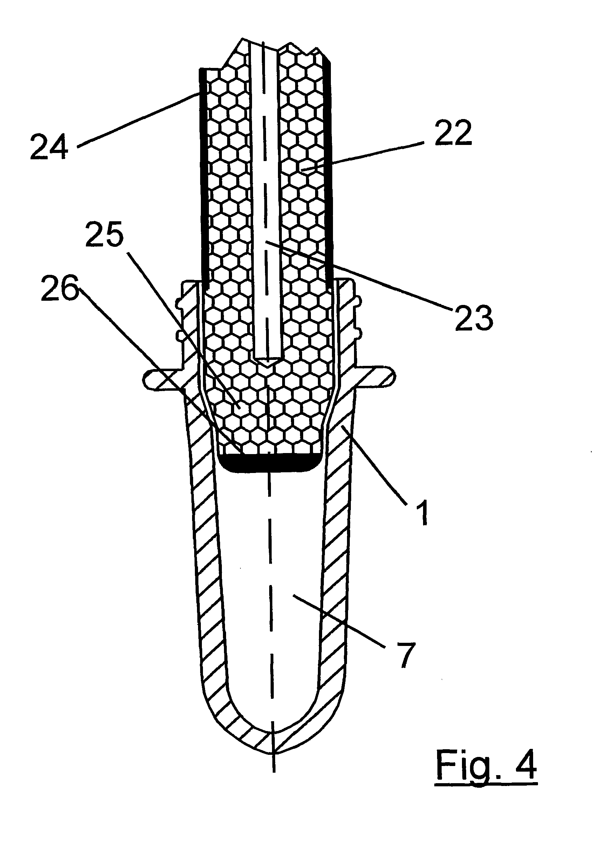

Bei der Ausführungsform gemäß Fig. 4, die jedoch nicht Teil der Erfindung ist, wird der Vorformling (1) von einem Innendorn (22) beaufschlagt, der aus einem porösen Material ausgebildet ist. Der Innendorn (22) ist mit einem Druckmittelkanal (23) versehen. Der Druckmittelkanal (23) kann in Abhängigkeit von einer jeweiligen Ansteuerung sowohl Überdruck als auch Unterdruck zuführen. Zur Vermeidung von Druckverlusten ist der Innendorn (22) außenseitig bereichsweise mit einer Dichtung (24) versehen. Bei der Ausführungsform gemäß Fig. 4, die jedoch nicht Teil der Erfindung ist, ist der Innendorn (22) nur für eine bereichsweise Nachverformung des Vorformlings (1) im Bereich des Mündungsabschnittes (6) sowie eines dem Mündungsabschnitt (6) zugewandten Teiles der Seitenwand (4) ausgebildet. Im Bereich einer Kuppe (25) trägt der Innendorn (22) deshalb hier ebenfalls eine Dichtung (26).

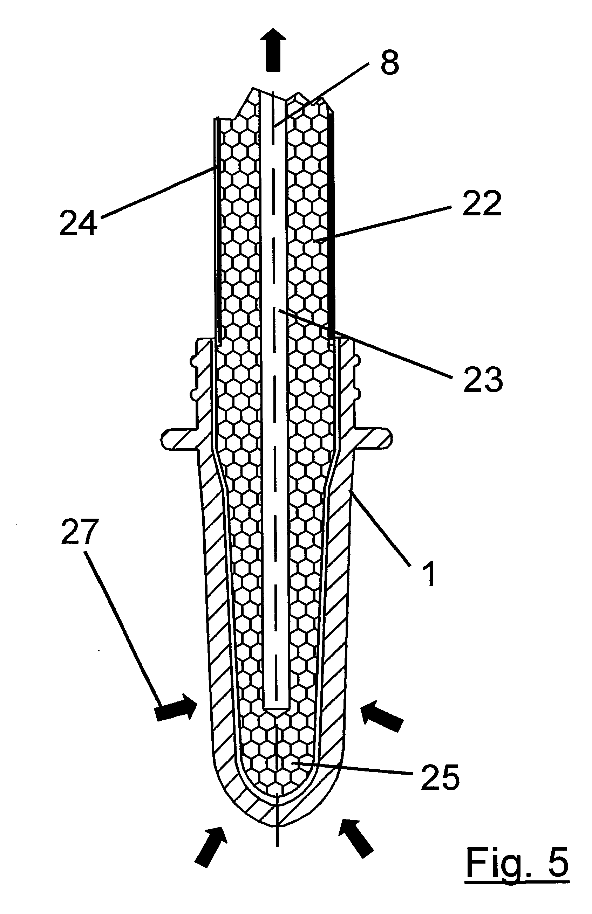

Bei der Ausführungsform gemäß Fig. 5, die jedoch nicht Teil der Erfindung ist, ist der Innendorn (22) zu einer Nachverformung des Vorformlings (1) entlang der gesamten Ausdehnung der Vorformlingslängsachse (8) ausgebildet. Der Innendorn (22) weist deshalb eine gegenüber der Ausführungsform in Fig. 4 abgewandelte Kontur auf. Eine Dichtung (26) im Bereich der Kuppe (25) ist bei dieser Ausführungsform nicht erforderlich. Zusätzlich zu einer Beaufschlagung des Vorformlings (1) mit Hilfe des Innendorns (22) kann gemäß der Ausführungsform in Fig. 5, die jedoch nicht Teil der Erfindung ist, eine von außen auf den Vorformling (1) einwirkende Luftkühlung (27) realisiert werden.

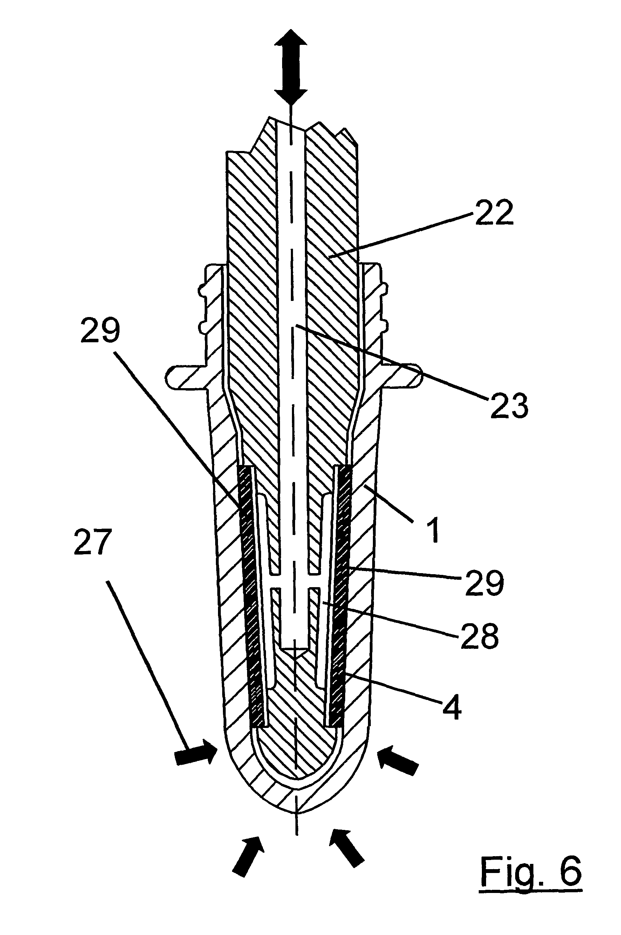

Bei der Ausführungsform gemäß Fig. 6, die jedoch nicht Teil der Erfindung ist, ist der Druckmittelkanal (23) an Verteilkammern (28) angeschlossen, die von Membranen (29) verschlossen sind. Bei einer Druckbeaufschlagung des Druckmittelkanals (23) werden die Membranen (29) gegen die Seitenwand (4) des Vorformlings (1) gepreßt und führen eine Verformung des Vorformlings (1) durch. Auch durch die von der Membran (29) erzeugte Kraft kann der Vorformling (1) entweder gegen die Innenwandung einer Kühlhülse gedrückt oder in vorgegebener Weise verformt werden.

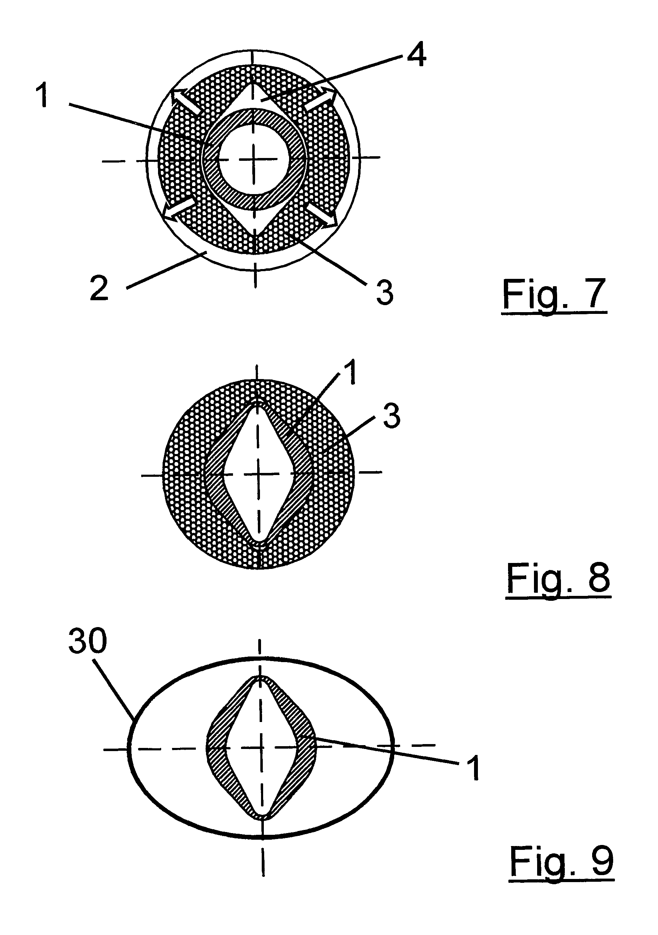

Fig. 7 zeigt einen Querschnitt durch einen Einsatz (3) mit einem in die Kavität (14) eingesetzten Vorformling (1). Der Einsatz (3) wird vom Rahmen (2) gehaltert.

Nach einer Unterdruckbeaufschlagung wird der Vorformling (1) gemäß Fig. 1 zu einem Vorformling entsprechend Fig. 8 verformt. Insbesondere ist aus Fig. 8 zu erkennen, daß durch die Verformung in einer Umfangsrichtung des Vorformlings ein unterschiedlicher Wanddickenverlauf erzeugt wurde. Die Vorformlingsgestaltung gemäß Fig. 8 ist insbesondere für die Herstellung von ovalen Flaschen geeignet.

Fig. 9 zeigt die Zuordnung des Vorformlings (1) gemäß Fig. 8 zu einer Behälterkontur (30) eines Behälters mit ovalem Querschnitt. Die Materialverteilung im Vorformling (1) ist derart gewählt, daß diejenigen Bereiche, die bei der anschließenden Blasverformung nur relativ geringfügig gereckt werden, dünner ausgebildet sind als diejenigen Bereiche, die bei der Blasverformung stärker gereckt werden. Durch die entsprechende Materialverteilung werden bei einem geblasenen Behälter eine sehr gleichmäßige Wanddickenverteilung und damit gleichmäßige Materialeigenschaften unterstützt.

Bei einer kombinierten wahlweisen Beaufschlagung des Einsatzes (3) mit Unterdruck und Überdruck kann eine Materialreinigung in einfacher Weise derart durchgeführt werden, daß ohne eingesetzten Vorformling (1) eine Druckmittelbeaufschlagung erfolgt, die zu einem Abblasen von Verunreinigungen führt. Eine Trennung des Vorformlings (1) vom Innendorn (22) kann ebenfalls durch eine Druckmittelbeaufschlagung des Innendorns (22) unterstützt werden. Bei einer kombinierten Verwendung des Innendornes (22) und eines Einsatzes (3) aus einem porösen Material kann eine Trennung des Vorformlings (1) vom Innendorn (22) auch durch eine externe Unterdruckbeaufschlagung unterstützt werden.

## Patentansprüche

1. Verfahren zur Bearbeitung eines spritzgegossenen thermoplastischen Vorformlings (1) für die Verwendung in einem anschließenden Prozess der Blasverformung in einen Behälter, wobei das Verfahren die folgenden Schritte umfasst:
Spritzgießen des Vorformlings (1);
Aufnehmen des Vorformlings in einem Einsatz (3) mit einer Begrenzungsfläche (15), die eine Kavität (14) definiert und deren Länge im Wesentlichen der Länge des im Einsatz aufgenommen Teils des Vorformlings (1) entspricht, wobei die Begrenzungsfläche (15) des Einsatzes (3) wenigstens bereichsweise ein poröses Material umfasst; und
Verformen des aufgenommen Vorformlings (1) durch Unterdruckbeaufschlagung des Einsatzes (3), indem die zwischen der Begrenzungsfläche (15) des Einsatzes (3) und dem Vorformling (1) befindliche Luft abgesaugt wird, so dass der im Innenraum (7) des Vorformlings (1) wirkende Umgebungsdruck den Vorformling (1) gegen die Begrenzungsfläche (15) des Einsatzes (3) drückt.

2. Verfahren nach Anspruch 1, wobei der Unterdruck dem porösen Material des Einsatzes (3) über einen Unterdruckkanal (10) zugeführt wird.

3. Verfahren nach Anspruch 1 oder 2, wobei das Verfahren ferner den Schritt des Abdichtens desjenigen Teils des Vorformlings (1) umfasst, der mit dem Einsatz (3) zusammenwirkt, um ein Einziehen von Umgebungsluft zu vermeiden, wenn ein Unterdruck aufgebracht wird, wobei das Abdichten mittels einer Dichtung (13, 24, 26) in dem Einsatz (3) erfolgt.

4. Verfahren nach einem der Ansprüche 1 bis 3, wobei das Verfahren ferner den Schritt des Kühlens des Vorformlings (1) in dem Einsatz (3) umfasst, in dem ein Kühlkanal (11) angeordnet ist.

5. Verfahren nach einem der Ansprüche 1 bis 3, wobei das Verfahren ferner den Schritt des Kühlens des Vorformlings (1) in dem Einsatz (3) umfasst, der von einem Rahmen (2) gehaltert ist, in dem ein Kühlkanal (11) angeordnet ist.

6. Verfahren nach einem der Ansprüche 4 oder 5, wobei das Kühlen des Vorformlings (1) in dem Einsatz (3) **dadurch** bewirkt wird, dass der Einsatz (3) in einer Kühlhülse angeordnet ist.

7. Verfahren nach Anspruch 1, wobei das Verfahren ferner den Schritt des Aufbringens eines Überdrucks auf den Vorformling (1) mittels einer Druckquelle (20) umfasst, die mit dem Einsatz (3) verbunden ist.

8. Verfahren nach Anspruch 1, wobei die Unterdruckbeaufschlagung des Vorformlings (1) durch lokale poröse Einsätze (3) hindurch erfolgt.

9. Verfahren nach Anspruch 8, wobei das Verfahren ferner den Schritt des Aufbringens lokal variierender Druckbedingungen entlang der Begrenzungsfläche (15) des Einsatzes (3) umfasst, wobei die lokalen porösen Einsätze (3) mit einer Druckquelle (20) sowie mit einer oder mehreren Unterdruckquellen (21) verbunden sind und über ein Steuerventil (19) zeitlich angesteuert werden können.

10. Verfahren nach Anspruch 1, wobei das Verfahren ferner den Schritt des Erzeugens einer Luftströmung durch die Kavität (14) in Richtung auf einen Unterdruckkanal (9) mittels eines Druckmittelanschlusses (17) des Einsatzes (3) umfasst, um das Einbringen des Vorformlings (1) in die Kavität (14) zu erleichtern.

11. Verfahren nach Anspruch 1, wobei der Schritt des Verformens des aufgenommen Vorformlings (1) durch Unterdruckbeaufschlagung des Einsatzes (3) ein Nachverformen des Vorformlings bewirkt, um Deformationen eines Vorformlings (1) zu kompensieren, der ungewollt vom Spritzgusswerkzeug nicht im vollen Umfang ausgeformt worden ist.

12. Verfahren nach Anspruch 1, wobei der Schritt des Verformens des aufgenommen Vorformlings (1) durch Unterdruckbeaufschlagung des Einsatzes (3) ein Nachverformen des Vorformlings bewirkt, um Fehler eines bewusst zu früh entformten Vorformlings (1) zu kompensieren.

13. Vorrichtung zur Bearbeitung eines spritzgegossenen thermoplastischen Vorformlings (1) für die Verwendung in einem anschließenden Prozess der Blasverformung in einen Behälter, wobei die Vorrichtung umfasst:
einen Einsatz (3) für die Aufnahme des Vorformlings (1) mit einer Begrenzungsfläche (15), die eine Kavität (14) definiert und deren Länge im Wesentlichen der Länge des im Einsatz aufgenommenen Teils des Vorformlings (1) entspricht,
**dadurch gekennzeichnet,**
**dass** die Begrenzungsfläche (15) des Einsatzes (3) wenigstens bereichsweise ein poröses Material zur Verformung des aufgenommen Vorformlings (1) durch Unterdruckbeaufschlagung des Einsatzes (3) umfasst, indem die zwischen der Begrenzungsfläche (15) des Einsatzes (3) und dem Vorformling (1) befindliche Luft abgesaugt werden kann, so dass der im Innenraum (7) des Vorformlings (1) wirkende Umgebungsdruck den Vorformling (1) gegen die Begrenzungsfläche (15) des Einsatzes (3) drückt.

14. Vorrichtung nach Anspruch 13, wobei in dem Einsatz (3) ein Unterdruckkanal (10) angeordnet ist, über den der Unterdruck dem porösen Material zugeführt wird.

15. Vorrichtung nach Anspruch 13, wobei der Einsatz (3) eine Dichtung (13, 24, 26) umfasst, um den Teil des Vorformlings (1) darin abzudichten, um das Einziehen von Umgebungsluft zu vermeiden, wenn ein Unterdruck aufgebracht wird.

16. Vorrichtung nach Anspruch 13, wobei der Einsatz (3) einen Kühlkanal (11) umfasst.

17. Vorrichtung nach Anspruch 13, wobei der Einsatz (3) in einem Rahmen (2) angeordnet ist.

18. Vorrichtung nach Anspruch 17, wobei in dem Rahmen (2) ein Kühlkanal (11) angeordnet ist.

19. Vorrichtung nach Anspruch 13, wobei der Einsatz (3) in einer Kühlhülse angeordnet ist.

20. Vorrichtung nach Anspruch 13, wobei der Einsatz (3) für eine Verbindung mit einer Druckquelle ausgestaltet ist, um einen Überdruck auf den Vorformling (1) aufzubringen.

21. Vorrichtung nach Anspruch 13, wobei der Einsatz (3) aus lokalen porösen Einsätzen ausgestaltet ist.

22. Vorrichtung nach Anspruch 21, wobei die lokalen porösen Einsätze (3) mit einer Druckquelle (20) sowie mit einer oder mehreren Unterdruckquellen (21) verbunden sind und über ein Steuerventil (19) zeitlich angesteuert werden können, um lokal variierende Druckbedingungen entlang der Begrenzungsfläche (15) des Einsatzes (3) aufzubringen.

23. Vorrichtung nach Anspruch 13, wobei der Einsatz (3) ferner einen Druckmittelanschluss (17) umfasst, um eine Luftströmung durch die Kavität (14) in Richtung auf einen Unterdruckkanal (9) zu erzeugen, um das Einbringen des Vorformlings (1) in die Kavität (14) zu erleichtern.

24. Vorrichtung nach Anspruch 13, wobei die Vorrichtung dazu ausgestaltet ist, beim Verformen des aufgenommenen Vorformlings (1) den aufgenommen Vorformling (1) durch Unterdruckbeaufschlagung des Einsatzes (3) nach zu verformen, um Deformationen eines Vorformlings (1) zu kompensieren, der ungewollt vom Spritzgusswerkzeug nicht im vollen Umfang ausgeformt worden ist.

25. Vorrichtung nach Anspruch 13, wobei die Vorrichtung dazu ausgestaltet ist, beim Verformen des aufgenommenen Vorformlings (1) den aufgenommen Vorformling (1) durch Unterdruckbeaufschlagung des Einsatzes (3) nach zu verformen, um Fehler eines bewusst zu früh entformten Vorformlings (1) zu kompensieren.

26. Vorrichtung nach Anspruch 13, wobei das poröse Material eines der folgenden Materialien enthält: ein poröses Metall; ein poröses Metall, das aus Aluminium besteht; ein poröses Metall, das aus Stahl besteht; ein poröses Metall, das aus einer Kupferlegierung besteht; und ein Sintermetall.

27. Vorrichtung nach Anspruch 26, wobei das poröse Material variable Porengrößen umfasst, die größer als einige µm sind.

28. Spritzgussmaschine, die eine Vorrichtung nach einem der Ansprüche 13 bis 27 umfasst.

## Claims

1. A method for processing an injection-molded thermoplastic preform (1) for use in a subsequent blow molding process into a container, wherein the method includes the following steps:
injection molding the preform (1);
receiving the preform in an insert (3) with a boundary surface (15) defining a cavity (14), wherein the length thereof essentially corresponds to the length of the portion of the preform (1) received within the insert, wherein at least a portion of the boundary surface (15) of the insert (3) includes a porous material; and
molding of the received preform (1) by applying a negative pressure to the insert (3), by evacuating the air located between the boundary surface (15) of the insert (3) and the preform (1), so that the ambient pressure in the interior (7) of the preform (1) presses the preform (1) against the boundary surface (15) of the insert (3).

2. The method according to claim 1, wherein the negative pressure is fed to the porous material of the insert (3) via a negative pressure conduit (10).

3. The method according to claims 1 or 2, wherein the method includes the further step of sealing that part of the preform (1) that interacts with the insert (3), in order to avoid an intake of ambient air when negative pressure is applied, wherein said sealing is achieved by means of a sealing element (13, 24, 26) in the insert (3).

4. The method according to any of claims 1 to 3, wherein the method includes the further step of cooling the preform (1) in the insert (3), in which a cooling conduit (11) is located.

5. The method according to any of claims 1 to 3, wherein the method includes the further step of cooling the preform (1) in the insert (3), wherein the insert is held by a frame (2), in which a cooling conduit (11) is located.

6. The method according to claims 4 or 5, wherein the cooling of the preform (1) in the insert (3) is achieved by positioning the insert (3) in a cooling sleeve.

7. The method according to claim 1, wherein the method includes the further step of applying a positive pressure to the preform (1) by means of a pressure source (20) that is connected to the insert (3).

8. The method according to claim 1, wherein the application of negative pressure to the insert (1) is effected through local, porous inserts (3).

9. The method according to claim 8, wherein the method includes the further step of applying locally varying pressure conditions along the boundary surface (15) of the insert (3), wherein the local, porous inserts (3) are connected to a pressure source (20) and to one or more negative pressure sources (21) and can be temporally controlled by means of a control valve (19).

10. The method according to claim 1, wherein the method includes the further step of generating an air stream through the cavity (14) in the direction of a negative pressure conduit (9) by means of a pressure connection (17) of the insert (3), in order to facilitate the insertion of the preform (1) into the cavity (14).

11. The method according to claim 1, wherein the step of molding the received preform (1) by application of negative pressure to the insert (3) results in a remolding of the preform, in order to compensate for deformations of a preform (1) that unintentionally has not been fully molded by the injection molding machine.

12. The method according to claim 1, wherein the step of molding the received preform (1) by application of negative pressure to the insert (3) results in a remolding of the preform, in order to compensate for defects of a preform (1) that intentionally has not been fully molded.

13. A device for processing of an injection-molded, thermoplastic preform (1) for use in a subsequent blow-molding process into a container, wherein the device comprises:
an insert (3) for receiving the preform (1), the insert having a boundary surface (15) that defines a cavity (14), wherein the length thereof essentially corresponds to the length of the portion of the preform (1) received within the insert,
**characterized in that**
at least a portion of the boundary surface (15) of the insert (3) includes a porous material for molding the received preform (1) by applying a negative pressure to the insert (3), so that the air located between the boundary surface (15) of the insert (3) and the preform (1) can be evacuated, so that the ambient pressure in the interior (7) of the preform (1) presses the preform (1) against the boundary surface (15) of the insert (3).

14. The device according to claim 13, wherein a negative pressure conduit (10) is located in the insert (3), wherein the negative pressure is fed to the porous material via the negative pressure conduit.

15. The device according to claim 13, wherein the insert (3) includes a sealing element (13, 24, 26) for sealing the part of the preform (1) within the insert, in order to avoid an intake of ambient air when a negative pressure is applied.

16. The device according to claim 13, wherein the insert (3) includes a cooling conduit (11).

17. The device according to claim 13, wherein the insert (3) is located in a frame (2).

18. The device according to claim 17, wherein a cooling conduit (11) is located in the frame (2).

19. The device according to claim 13, wherein the insert (3) is located in a cooling sleeve.

20. The device according to claim 13, wherein the insert (3) is configured to be connected to a pressure source, in order to apply a positive pressure to the preform (1).

21. The device according to claim 13, wherein the insert (3) comprises locally porous inserts.

22. The device according to claim 21, wherein the locally porous inserts (3) are connected to a pressure source (20) and to one or more negative pressure sources (21) and can be temporally controlled by means of a control valve (19), in order to generate locally varying pressure conditions across the boundary surface (15) of the insert (3).

23. The device according to claim 13, wherein the insert (3) further includes a pressure connection (17), in order to generate an air stream through the cavity (14) in the direction of a negative pressure conduit (9), in order to facilitate the insertion of the preform (1) into the cavity (14).

24. The device according to claim 13, wherein the device is configured to, when molding the received preform (1), to remold the received preform (1) by applying a negative pressure to the insert (3), in order to compensate for deformations of a preform (1) that unintentionally has not been fully molded by the injection molding machine.

25. The device according to claim 13, wherein the device is configured to, when molding the received preform (1), to remold the received preform (1) by applying a negative pressure to the insert (3), in order to compensate for defects of a preform (1) that intentionally has not been fully molded.

26. The device according to claim 13, wherein the porous material comprises one of the following materials: a porous metal; a porous metal composed of aluminium; a porous metal composed of steel; a porous metal composed of a copper alloy; and a sintered metal.

27. The device according to claim 26, wherein the porous material has variable pore sizes that are larger than a few micrometers.

28. An injection molding machine including a device according to one of claims 13 to 27.

## Revendications

1. Procédé pour façonner une préforme (1) thermoplastique moulée par injection destinée à être utilisée dans un processus ultérieur de soufflage pour transformation en un récipient, ledit procédé englobant les étapes suivantes :
moulage par injection de la préforme (1) ;
insertion de la préforme dans un empiècement (3) présentant une périphérie (15) définissant une cavité (14), et dont la longueur correspond pour l'essentiel à la longueur de la partie de la préforme insérée (1) dans l'empiècement, ladite périphérie (15) de l'empiècement (3) comprenant au moins par zones du matériau poreux ; et
façonnage de la préforme insérée (1) par application d'une dépression dans l'empiècement (3) en aspirant l'air qui se trouve entre la périphérie (15) de l'empiècement (3) et la préforme (1), de façon à ce que la pression ambiante agissant à l'intérieur (7) de la préforme (1) pousse la préforme (1) contre la périphérie (15) de l'empiècement (3).

2. Procédé selon la revendication 1, dans lequel la dépression est appliquée au matériau poreux de l'empiècement (3) par le biais d'un canal d'aspiration (10).

3. Procédé selon l'une des revendications 1 ou 2, ledit procédé comprenant en outre l'étape de l'étanchéisation de la partie de la préforme (1) qui est en interaction avec l'empiècement (3) afin d'éviter une aspiration d'air ambiant lors de l'application d'une dépression, l'étanchéisation étant réalisée au moyen d'un joint (13, 24, 26) dans l'empiècement (3).

4. Procédé selon l'une des revendications 1 à 3, ledit procédé comprenant en outre l'étape du refroidissement de la préforme (1) dans l'empiècement (3), dans lequel un canal de refroidissement (11) est agencé.

5. Procédé selon l'une des revendications 1 à 3, ledit procédé comprenant en outre l'étape du refroidissement de la préforme (1) dans l'empiècement (3), lequel est maintenu par un châssis (2) présentant un canal de refroidissement (11).

6. Procédé selon l'une des revendications 4 ou 5, dans lequel le refroidissement de la préforme (1) dans l'empiècement (3) est obtenu par le fait que l'empiècement (3) se trouve dans une gaine de refroidissement.

7. Procédé selon la revendication 1, ledit procédé comprenant en outre l'étape de l'application d'une surpression à la préforme (1) au moyen d'une source de pression (20) reliée à l'empiècement (3).

8. Procédé selon la revendication 1, dans lequel la dépression est appliquée à la préforme (1) à travers des inserts locaux poreux (3).

9. Procédé selon la revendication 8, ledit procédé comprenant en outre l'étape de l'application de conditions de pression localement variables le long de la périphérie (15) de l'empiècement (3), les inserts locaux poreux (3) étant reliés à une source de pression (20) ainsi qu'à une ou plusieurs sources de dépression (21) et pouvant être commandés dans le temps par une vanne-pilote.

10. Procédé selon la revendication 1, ledit procédé comprenant en outre l'étape de la génération d'un flux d'air à travers la cavité (14) en direction d'un canal de dépression (9) au moyen d'un raccord de pression (17) de l'empiècement (3) afin de faciliter l'insertion de la préforme (1) dans la cavité (14).

11. Procédé selon la revendication 1, dans lequel l'étape du façonnage de la préforme insérée (1) par application d'une dépression dans l'empiècement (3) induit un refaçonnage de la préforme qui permet de compenser les déformations d'une préforme (1) qui, de façon involontaire, n'aurait pas été entièrement façonnée par l'outil de moulage par injection.

12. Procédé selon la revendication 1, dans lequel l'étape du façonnage de la préforme insérée (1) par application d'une dépression dans l'empiècement (3) induit un refaçonnage de la préforme qui permet de compenser les défauts d'une préforme (1) intentionnellement démoulée trop tôt.

13. Dispositif de façonnage d'une préforme (1) thermoplastique moulée par injection destinée à être utilisée dans un processus ultérieur de soufflage pour transformation en un récipient, ledit dispositif englobant :
un empiècement (3) permettant d'insérer la préforme (1), présentant une périphérie (15) définissant une cavité (14), et dont la longueur correspond pour l'essentiel à la longueur de la partie de la préforme insérée (1) dans l'empiècement,
**caractérisé par le fait que**
ladite périphérie (15) de l'empiècement (3) comprend au moins par zones du matériau poreux pour le façonnage de la préforme insérée (1) par application d'une dépression dans l'empiècement (3), et ce à travers la possibilité d'une aspiration de l'air qui se trouve entre la périphérie (15) de l'empiècement (3) et la préforme (1), de façon à ce que la pression ambiante agissant à l'intérieur (7) de la préforme (1) pousse la préforme (1) contre la périphérie (15) de l'empiècement (3).

14. Dispositif selon la revendication 13, dans lequel ledit empiècement (3) comprend un canal de dépression (10) par lequel la dépression est appliquée au matériau poreux.

15. Dispositif selon la revendication 13, dans lequel l'empiècement (3) comprend un joint (13, 24, 26) servant à isoler la partie de la préforme (1) qui se trouve en son intérieur afin d'éviter l'aspiration d'air ambiant lors de l'application de la dépression.

16. Dispositif selon la revendication 13, dans lequel l'empiècement (3) comprend un canal de refroidissement (11).

17. Dispositif selon la revendication 13, dans lequel l'empiècement (3) est positionné dans un châssis (2).

18. Dispositif selon la revendication 17, dans lequel le châssis (2) comprend un canal de refroidissement (11).

19. Dispositif selon la revendication 13, dans lequel l'empiècement est disposé dans une gaine de refroidissement.

20. Dispositif selon la revendication 13, dans lequel l'empiècement (3) est conçu pour être raccordé à une source de pression permettant d'appliquer une surpression à la préforme (1).

21. Dispositif selon la revendication 13, dans lequel l'empiècement (3) est composé d'inserts locaux poreux.

22. Dispositif selon la revendication 21, dans lequel les inserts locaux poreux (3) sont raccordés à une source de pression (20) ainsi qu'à une ou plusieurs sources de dépression (21) et peuvent être commandés dans le temps par le biais d'une vanne-pilote (19) afin d'appliquer des conditions de pression localement variables le long de la périphérie (15) de l'empiècement (3).

23. Dispositif selon la revendication 13, dans lequel l'empiècement (3) comporte en outre un raccord de pression (17) afin de générer un flux d'air à travers la cavité (14) en direction d'un canal de dépression (9) afin de faciliter l'insertion de la préforme (1) dans la cavité (14).

24. Dispositif selon la revendication 13, ledit dispositif étant conçu pour procéder à un refaçonnage de la préforme insérée (1) pendant le façonnage de ladite préforme (1) par application d'une dépression dans l'empiècement (3), en vue de compenser les déformations d'une préforme (1) qui n'aurait pas été entièrement façonnée par l'outil de moulage par injection.

25. Dispositif selon la revendication 13, ledit dispositif étant conçu pour procéder à un refaçonnage de la préforme insérée (1) pendant le façonnage de ladite préforme (1) par application d'une dépression dans l'empiècement (3) en vue de compenser les défauts d'une préforme (1) intentionnellement démoulée trop tôt.

26. Dispositif selon la revendication 13, dans lequel le matériau poreux comprend l'un des matériaux suivants : un métal poreux ; un métal poreux composé d'aluminium ; un métal poreux composé d'acier ; un métal poreux composé d'un alliage de cuivre ; et un métal fritté.

27. Dispositif selon la revendication 26, dans lequel le matériau poreux présente des pores de tailles variables supérieures à plusieurs µm.

28. Machine de moulage par injection comprenant un dispositif selon l'une des revendications 13 à 27.
